# FASCICULE DE BREVET EUROPEEN

(11) **EP 2 687 402 B1**
(45) Date de publication et mention de la délivrance du brevet: **07.10.2015**
(21) Numéro de dépôt: 13176943.2
(22) Date de dépôt: 17.07.2013
(51) Int. Cl.: B60N 2/48

(54) **Dispositif d'appui-tête pour siège de véhicule automobile**
Kopfstützenvorrichtung für Fahrzeugsitz
Headrest device for a motor vehicle seat

(30) Priorité: 20.07.2012 FR 1257087
(43) Date de publication de la demande: 22.01.2014
(73) Titulaire: CENTRE D'ETUDE ET DE RECHERCHE POUR L'AUTOMOBILE (CERA), 51100 Reims (FR)
(72) Inventeur: Horny, Frédéric, 51100 Reims (FR); Balloir, Sébastien, 51350 Cormontreuil (FR); Delus, Christian, 51380 Verzy (FR)
(74) Mandataire: Sayettat, Julien Christian

(56) Documents cités:
- FR-A1- 2 914 883

## Description

L'invention concerne un dispositif d'appui-tête pour siège de véhicule automobile et un appui-tête d'un tel dispositif.

Il est connu, notamment du document FR-2 914 883, de réaliser un dispositif d'appui-tête pour siège de véhicule automobile, ledit dispositif comprenant :
- un appui-tête comprenant une armature, ladite armature comprenant au moins une tige métallique de montage sur un dossier dudit siège, ladite tige comprenant au moins un cran de blocage en hauteur et une zone affaiblie de pliage,
- une gaine de réception en coulissement de ladite tige,
- un tiroir monté en coulissement radial en haut de ladite gaine, ledit tiroir étant pourvu d'un bord d'engagement dans ledit cran,
- un ressort d'actionnement dudit tiroir vers une configuration de blocage où ledit bord est engagé dans ledit cran,
- une structure de réception en emboitement de ladite gaine, ladite structure étant destinée à être montée en haut d'une armature dudit dossier.

La fonction du cran de blocage est notamment de permettre un réglage en hauteur de l'appui-tête ou d'éviter son extraction de la gaine lors d'une collision du véhicule.

Avec un tel agencement, en cas de choc violent de la tête du passager sur l'appui-tête, la tige plie au niveau de la zone affaiblie.

Ceci permet d'éviter une déchirure de la tige au niveau du cran de blocage, une telle déchirure pouvant occasionner une éjection de l'appui-tête et/ou l'apparition de parties métalliques saillantes susceptibles d'entrer en contact avec un occupant du véhicule, et donc de lui causer des blessures.

La zone de pliage est notamment sous la forme d'un cran ou d'un méplat disposé entre un coussin de l'appui-tête et le cran de blocage, ledit cran ou méplat étant de ce fait visible, ce qui est inesthétique.

L'invention a pour but de pallier cet inconvénient.

A cet effet, et selon un premier aspect, l'invention propose un dispositif d'appui-tête pour siège de véhicule automobile, ledit dispositif comprenant :
- un appui-tête comprenant une armature, ladite armature comprenant au moins une tige métallique de montage sur un dossier dudit siège, ladite tige comprenant au moins un cran de blocage en hauteur et une zone affaiblie de pliage,
- une gaine de réception en coulissement de ladite tige,
- un tiroir monté en coulissement radial en haut de ladite gaine, ledit tiroir étant pourvu d'un bord d'engagement dans ledit cran,
- un ressort d'actionnement dudit tiroir vers une configuration de blocage où ledit bord est engagé dans ledit cran,
- une structure de réception en emboitement de ladite gaine, ladite structure étant destinée à être disposée en haut d'une armature dudit dossier,
un espace étant prévu entre le haut de ladite structure et le bas dudit bord, ladite zone de pliage étant située dans ledit espace lorsque ledit bord est engagé dans ledit cran.

Dans cette description, les termes de positionnement dans l'espace (haut, bas, dessus, dessous, latéral, arrière,...) sont pris en référence au dispositif en place dans le véhicule.

Le terme « radial » est pris en référence à l'axe général de coulissement de la tige dans la gaine.

Avec un tel agencement, la tige plie au niveau de la zone de pliage sous l'effet d'un choc violent appliqué vers l'arrière sur l'appui-tête, ce qui permet d'éviter un déchirement de ladite tige au niveau du cran de blocage.

Par ailleurs, la zone de pliage est invisible du fait de son positionnement particulier dans un espace prévu à cet effet.

Selon un deuxième aspect, l'invention propose un appui-tête d'un tel dispositif.

D'autres particularités et avantages de l'invention apparaîtront dans la description qui suit, faite en référence aux figures jointes, dans lesquelles :

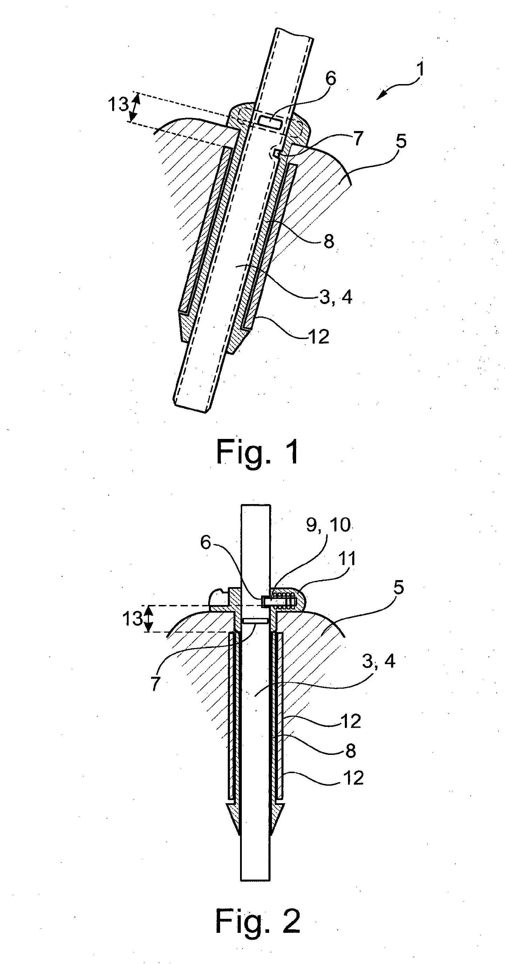

- la figure 1 est une vue latérale schématique partielle d'un dispositif selon une réalisation, en place sur un dossier de siège et dans une configuration de blocage de la tige,
- la figure 2 est analogue à la figure 1, le dispositif étant vu de l'arrière.

En référence aux figures, on décrit un dispositif 1 d'appui-tête pour siège de véhicule automobile, ledit dispositif comprenant :
- un appui-tête, représenté partiellement, comprenant une armature 3, ladite armature comprenant au moins une tige 4 métallique - notamment tubulaire - de montage sur un dossier 5 dudit siège, ladite tige comprenant au moins un cran de blocage 6 en hauteur et une zone affaiblie de pliage 7,
- une gaine 8 - notamment en matériau plastique moulé - de réception en coulissement de ladite tige,
- un tiroir 9 monté en coulissement radial en haut de ladite gaine, ledit tiroir étant pourvu d'un bord d'engagement 10 dans ledit cran,
- un ressort 11 d'actionnement dudit tiroir vers une configuration de blocage où ledit bord est engagé dans ledit cran,
- une structure 12 - notamment métallique - de réception en emboitement de ladite gaine, ladite structure étant destinée à être disposée en haut d'une armature, non représentée, dudit dossier,

un espace 13 étant prévu entre le haut de ladite structure et le bas dudit bord, ladite zone de pliage étant située dans ledit espace lorsque ledit bord est engagé dans ledit cran.

Selon la réalisation représentée, la zone de pliage 7 est sous la forme d'un cran de pliage 7.

Selon la réalisation représentée, le cran de pliage 7 est disposé en arrière de la tige 4, de manière à faciliter le pliage lorsque l'appui-tête reçoit un choc vers l'arrière.

Selon la réalisation représentée, le cran de pliage 7 présente un profil général en V. Une telle forme facilite le pliage attendu.

En particulier, le V forme un angle compris entre 10 et 45° et a une profondeur comprise entre 1 et 3 mm, le profil du cran de pliage 7 pouvant par ailleurs présenter un méplat disposé entre les branches du V.

Selon la réalisation représentée, le cran de pliage 7 est disposé entre 5 et 30 mm en dessous du cran de blocage 6, les cotes étant prises en partie médiane des fonds desdits crans.

Le fait de prévoir un écart de 5 mm minimum entre les crans 6,7 permet de garantir un non déchirement de la tige 4 au niveau du cran de blocage 6.

Selon la réalisation représentée, le cran de blocage 6 est disposé latéralement sur la tige 4, ceci permettant de minimiser le risque d'amorce de rupture sur ledit cran de blocage.

Selon la réalisation représentée, la structure 12 de réception de la gaine 8 est sous forme d'un manchon métallique destiné à être soudé à l'armature de dossier 5 du siège.

Selon une variante non représentée, la structure 12 de réception de la gaine 8 est sous forme de deux orifices décalés en hauteur réalisés dans l'armature de dossier 5 du siège.

On décrit à présent un appui-tête d'un dispositif 1, ledit appui-tête une armature 3, ladite armature comprenant au moins une tige 4 de montage sur un dossier 5 dudit siège, ladite tige comprenant au moins un cran de blocage 6 en hauteur disposé latéralement sur ladite tige, ladite tige comprenant en outre un cran de pliage 7 de ladite tige, ledit cran de pliage étant situé entre 5 et 30 mm en dessous dudit cran de blocage et en arrière de ladite tige.

## Revendications

1. Dispositif (1) d'appui-tête pour siège de véhicule automobile, ledit dispositif comprenant :
• un appui-tête comprenant une armature (3), ladite armature comprenant au moins une tige (4) métallique de montage sur un dossier (5) dudit siège, ladite tige comprenant au moins un cran de blocage (6) en hauteur et une zone affaiblie de pliage (7),
• une gaine (8) de réception en coulissement de ladite tige,
• un tiroir (9) monté en coulissement radial en haut de ladite gaine, ledit tiroir étant pourvu d'un bord d'engagement (10) dans ledit cran,
• un ressort (11) d'actionnement dudit tiroir vers une configuration de blocage où ledit bord est engagé dans ledit cran,
• une structure (12) de réception en emboitement de ladite gaine, ladite structure étant destinée à être disposée en haut d'une armature dudit dossier,
ledit dispositif étant **caractérisé en ce qu'**un espace (13) est prévu entre le haut de ladite structure et le bas dudit bord, ladite zone de pliage étant située dans ledit espace lorsque ledit bord est engagé dans ledit cran.

2. Dispositif selon la revendication 1, **caractérisé en ce que** la zone de pliage (7) est sous la forme d'un cran de pliage (7).

3. Dispositif selon la revendication 2, **caractérisé en ce que** le cran de pliage (7) est disposé en arrière de la tige (4).

4. Dispositif selon la revendication 2 ou 3, **caractérisé en ce que** le cran de pliage (7) présente un profil général en V.

5. Dispositif selon la revendication 4, **caractérisé en ce que** le profil du cran de pliage (7) présente un méplat disposé entre les branches du V.

6. Dispositif selon l'une quelconque des revendications 2 à 5, **caractérisé en ce que** le cran de pliage (7) est disposé entre 5 et 30 mm en dessous du cran de blocage (6).

7. Dispositif selon l'une quelconque des revendications 1 à 6, **caractérisé en ce que** le cran de blocage (6) est disposé latéralement sur la tige (4).

8. Dispositif selon l'une quelconque des revendications 1 à 7, **caractérisé en ce que** la structure (12) de réception de la gaine (8) est sous forme d'un manchon métallique destiné à être soudé à l'armature de dossier (5) du siège.

9. Dispositif selon l'une quelconque des revendications 1 à 7, **caractérisé en ce que** la structure (12) de réception de la gaine (8) est sous forme de deux orifices décalés en hauteur réalisés dans l'armature de dossier (5) du siège.

10. Appui-tête d'un dispositif selon la revendication 2, **caractérisé en ce qu'il** comprend une armature (3), ladite armature comprenant au moins une tige (4) de montage sur un dossier (5) dudit siège, ladite tige comprenant au moins un cran de blocage (6) en hauteur disposé latéralement sur ladite tige, ladite tige comprenant en outre un cran de pliage (7) de ladite tige, ledit cran de pliage étant situé entre 5 et 30 mm en dessous dudit cran de blocage et en arrière de ladite tige.

## Patentansprüche

1. Kopfstützenvorrichtung (1) für Kraftfahrzeugsitz, wobei die Vorrichtung Folgendes umfasst:
- eine Kopfstütze, die eine Bewehrung (3) umfasst, wobei die Bewehrung mindestens einen Metallschaft (4) zur Montage auf eine Rückenlehne (5) des Sitzes umfasst, wobei der Schaft mindestens eine Blockierungsraste (6) in Höhe und eine geschwächte Faltzone (7) umfasst,
- eine Hülse (8) zum gleitenden Aufnehmen des Schafts,
- einen Schieber (9), der unter radialem Gleiten oben auf der Hülse montiert ist, wobei der Schieber mit einem Rand (10) zum Eingreifen in die Raste versehen ist,
- eine Feder (11) zum Betätigen des Schiebers zu einer Blockierungskonfiguration, in der der Rand in die Raste eingerückt ist,
- eine Struktur (12) zur Aufnahme unter Einrasten der Hülse, wobei die Struktur dazu bestimmt ist, oben auf einer Bewehrung der Rückenlehne angeordnet zu sein, Vorrichtung **dadurch gekennzeichnet, dass** ein Raum (13) zwischen der Oberseite der Struktur und der Unterseite des Rands vorgesehen ist, wobei die Faltzone in dem Raum liegt, wenn der Rand in die Raste eingerückt ist.

2. Vorrichtung nach Anspruch 1, **dadurch gekennzeichnet, dass** die Faltzone (7) die Form einer Faltraste (7) hat.

3. Vorrichtung nach Anspruch 2, **dadurch gekennzeichnet, dass** die Faltraste (7) an der Rückseite des Schafts (4) angeordnet ist.

4. Vorrichtung nach Anspruch 2 oder 3, **dadurch gekennzeichnet, dass** die Faltraste (7) ein allgemeines V-Profil aufweist.

5. Vorrichtung nach Anspruch 4, **dadurch gekennzeichnet, dass** das Profil der Faltraste (7) eine Abflachung, die zwischen den Schenkeln des V angeordnet ist, aufweist.

6. Vorrichtung nach einem der Ansprüche 2 bis 5, **dadurch gekennzeichnet, dass** die Faltraste (7) zwischen 5 und 30 mm unterhalb der Blockierungsraste (6) angeordnet ist.

7. Vorrichtung nach einem der Ansprüche 1 bis 6, **dadurch gekennzeichnet, dass** die Blockierungsraste (6) seitlich auf dem Schaft (4) angeordnet ist.

8. Vorrichtung nach einem der Ansprüche 1 bis 7, **dadurch gekennzeichnet, dass** die Aufnahmestruktur (12) der Hülse (8) die Form eines Metallstutzens hat, der dazu bestimmt ist, an die Bewehrung der Rückenlehne (5) des Sitzes geschweißt zu werden.

9. Vorrichtung nach einem der Ansprüche 1 bis 7, **dadurch gekennzeichnet, dass** die Aufnahmestruktur (12) der Hülse (8) die Form von zwei in der Höhe versetzten Öffnungen hat, die in der Bewehrung der Rückenlehne (5) des Sitzes hergestellt sind.

10. Kopfstütze einer Vorrichtung nach Anspruch 2, **dadurch gekennzeichnet, dass** sie eine Bewehrung (3) umfasst, wobei die Bewehrung mindestens einen Schaft (4) zur Montage auf eine Rückenlehne (5) des Sitzes umfasst, wobei der Schaft mindestens eine Blockierungsraste (6) in Höhe umfasst, die seitlich auf dem Schaft angeordnet ist, wobei der Schaft außerdem eine Faltraste (7) des Schafts umfasst, wobei die Faltraste zwischen 5 und 30 mm unterhalb der Blockierungsraste und hinter dem Schaft liegt.

## Claims

1. Headrest device (1) for a motor vehicle seat, said device comprising:
- a headrest comprising a frame (3), said frame comprising at least one metal rod (4) for assembly on a backrest (5) of said seat, said rod comprising at least one locking notch (6) in height and a weakened fold area (7),
- a sheath (8) for slidingly receiving said rod,
- a drawer (9) mounted with radial sliding at the top of said sheath, said drawer provided with an engagement edge (10) in said notch,
- an actuating spring (11) of said drawer to a locked configuration wherein said edge is engaged in said notch;
- a structure (12) for receiving as nesting said sheath, with said structure being intended to be arranged at the top of a frame of said backrest,
said device being **characterised in that** a space (13) is provided between the top of said structure and the bottom of said edge, with said fold area being located in said space when said edge is engaged in said notch.

2. Device according to claim 1, **characterised in that** the fold area (7) is in the form of a fold notch (7).

3. Device according to claim 2, **characterised in that** the fold notch (7) is arranged at the rear of the rod (4).

4. Device according to claim 2 or 3, **characterised in that** the fold notch (7) has a general V-shaped profile.

5. Device according to claim 4, **characterised in that** the profile of the fold notch (7) has a flat arranged between the branches of the V.

6. Device according to any of claims 2 to 5, **characterised in that** the fold notch (7) is arranged between 5 and 30 mm below the locking notch (6).

7. Device according to any of claims 1 to 6, **characterised in that** the locking notch (6) is arranged laterally on the rod (4).

8. Device according to any of claims 1 to 7, **characterised in that** the structure (12) for receiving the sheath (8) is in the form of a metal sleeve intended to be welded to the frame of the backrest (5) of the seat.

9. Device according to any of claims 1 to 7, **characterised in that** the structure (12) for receiving the sheath (8) is in the form of two orifices offset in height made in the frame of the backrest (5) of the seat.

10. Headrest of a device according to claim 2, **characterised in that** it comprises a frame (3), said frame comprising at least one rod (4) for assembly on a backrest (5) of said seat, said rod comprising at least one locking notch (6) in height arranged laterally on said rod, said rod further comprising a fold notch (7) of said rod, said fold notch being located between 5 and 30 mm below said locking notch and at the rear of said rod.
